# EUROPÄISCHE PATENTSCHRIFT

(11) **EP 3 228 512 B1**
(45) Veröffentlichungstag und Bekanntmachung des Hinweises auf die Patenterteilung: **05.09.2018**
(21) Anmeldenummer: 17000391.7
(22) Anmeldetag: 10.03.2017
(51) Int. Cl.: B60T 15/20, B60T 13/26, B60T 13/68, B60T 13/66

(54) **PARK-LÖSE-VENTIL FÜR EIN ANHÄNGEFAHRZEUG**
PARK RELEASE VALVE FOR A TRAILER VEHICLE
CLAPET DESTINÉ À RELÂCHER LE FREIN DE STATIONNEMENT D'UNE REMORQUE

(30) Priorität: 05.04.2016 DE 102016004097
(43) Veröffentlichungstag der Anmeldung: 11.10.2017
(73) Patentinhaber: WABCO GmbH, 30432 Hannover (DE)
(72) Erfinder: Sieker, Armin, 33611 Bielefeld (DE); Stender, Axel, 31787 Hameln (DE); Witte, Norbert, 31867 Lauenau (DE)

(56) Entgegenhaltungen:
- EP-A1- 1 504 976
- EP-B1- 1 386 810
- DE-A1- 19 818 982
- DE-A1-102012 101 871
- DE-B3-102007 053 767
- DE-U1- 20 122 779
- FR-A1- 2 777 852

## Beschreibung

Die Erfindung betrifft ein Park-Löse-Ventil für ein Anhängefahrzeug mit pneumatischer Bremsanlage und zur Steuerung des Drucks in Federspeicher-Bremszylindern. Außerdem betrifft die Erfindung eine Ventilanordnung, eine pneumatische Bremsanlage und ein Anhängefahrzeug.

Die pneumatische Bremsanlage eines Anhängefahrzeugs wird typischerweise über zwei pneumatische Leitungen mit einem Zugfahrzeug verbunden. Eine Leitung führt Steuerdruck über einen Steueranschluss zum Anhängefahrzeug. Dieser Anschluss wird auch als "Bremse" bezeichnet. Die andere Leitung führt Vorratsdruck über einen als "Vorrat" bezeichneten Versorgungsanschluss zum Anhängefahrzeug.

Integriert ist eine Sicherheitsfunktion bei Abriss der Leitung für den Vorratsdruck. Hierzu wird der Druck in der Leitung überwacht. Bei zu großem Druckabfall wird das Anhängefahrzeug automatisch durch Federspeicherbremsen eingebremst.

Das Anhängefahrzeug weist einen Vorratsbehälter für Druckluft auf, der über den Versorgungsanschluss gespeist wird. Dadurch kann das Anhängefahrzeug über seine Betriebsbremsen mehrfach kurz hintereinander gebremst werden, ohne dass die hierfür erforderliche Druckluft zeitgleich über den Versorgungsanschluss zugeführt werden muss.

Moderne pneumatische Bremsanlagen weisen kombinierte Bremszylinder auf, nämlich mit Membran-Betriebsbremszylinder und Federspeicher-Bremszylinder in einer gemeinsamen Baugruppe. Dies hat den Vorteil, dass Bremskolben, Bremshebel und Bremsscheiben oder Bremstrommeln nur einmal je Baugruppe vorhanden sein müssen. Lediglich Federspeicher-Bremszylinder und Betriebsbremszylinder sind nebeneinander je Baugruppe vorhanden. Derartige kombinierte Bremszylinder werden auch als Tristop-Zylinder bezeichnet. Möglich ist aber auch eine getrennte Anordnung von Betriebsbremsen und Federspeicherbremsen.

In einem abgestellten und vom Zugfahrzeug getrennten Anhängefahrzeug sind die Federspeicherbremsen aktiviert, da die Federspeicher-Bremszylinder entlüftet sind. Zum Rangieren des Anhängefahrzeugs ist ein Lösen der Federspeicherbremsen erforderlich. Hierfür ist ein spezielles Park-Löse-Ventil vorgesehen, welches in einer Lösestellung die Federspeicher-Bremszylinder mit Druckluft aus dem Vorratsbehälter (des Anhängefahrzeugs) belüftet und so löst.

Nach Beendigung des Rangierens müssen die Federspeicher-Bremszylinder wieder entlüftet werden. Hierzu kann das Park-Löse-Ventil eine Parkstellung einnehmen.

In der Praxis kann das Park-Löse-Ventil aus zwei getrennt voneinander bedienbaren Ventileinheiten bestehen. Kompakter ist ein Ventil, in dem die beschreibenden Funktionalitäten soweit wie möglich zusammengefasst sind.

In der EP 1 386 810 B1 ist ein Kombiventil mit federnd aufgehängtem Doppelventilkörper offenbart. Eine Steuerstange ist zwischen drei Stellungen, Fahren- Parken- Rangieren, axial verschiebbar und durch eine Schiebehülse verriegelbar. Der Aufbau ist kompakt aber sehr komplex.

Die Federspeicher-Bremszylinder werden je nach Betriebsfall aus dem Vorratsdruck (über den Versorgungsanschluss) oder aus dem Vorratsbehälter des Anhängefahrzeugs gespeist. Eine Trennung der Leitungen für den Vorratsbehälter einerseits und für den Vorratsdruck andererseits ist deshalb sinnvoll. Ein weiteres derartiges Ventil ist aus der EP 1 504 976 A1 bekannt.

Aufgabe der vorliegenden Erfindung ist die Schaffung eines (anderen) Park-Löse-Ventils kompakter Bauart und hoher Funktionalität. Vorzugsweise soll auch ein ungewollter Druckausgleich zwischen dem Anschluss für Vorratsdruck und dem Anschluss für Vorratsbehälterdruck vermieden werden.

Zur Lösung der Aufgabe weist das erfindungsgemäße Park-Löse-Ventil die Merkmale des Anspruchs 1 auf, vorzugsweise wie folgt:
a) ein äußerer Steuerkolben und ein darin angeordneter innerer Steuerkolben,
b)
   - ein Anschluss vor Vorratsdruck,
   - ein Anschluss für Vorratsbehälterdruck,
   - ein Anschluss für Entlüftung,
   - ein Anschluss als Druckausgang,
c) der äußere Steuerkolben ist zumindest zwischen drei Stellungen bewegbar:
   - einer Lösestellung, dabei ist der Anschluss für Vorratsbehälterdruck mit dem Anschluss als Druckausgang verbunden,
   - einer Fahrtstellung, dabei ist der Anschluss für Vorratsdruck mit dem Anschluss für Vorratsbehälterdruck und mit dem Anschluss als Druckausgang verbunden,
   - einer Parkstellung, dabei ist der Anschluss als Druckausgang mit dem Anschluss für Entlüftung verbunden,
d) in Fahrtstellung ist der innere Steuerkolben mit Vorratsdruck beaufschlagt und drückt gegen den äußeren Steuerkolben, derart, dass der äußere Steuerkolben
in seiner Bewegung eingeschränkt ist und keine Lösestellung annehmen kann. Der Aufbau des Ventils ist insgesamt relativ kompakt. Die drei Stellungen sind durch Bewegung des ersten Steuerkolbens einstellbar. Zusätzlich können federbelastete Rasten zur Sicherung von Fahrtstellung und Parkstellung vorgesehen sein.

Nach einem weiteren Gedanken der Erfindung weist das Ventil zusätzlich folgende Merkmale auf:
a) ein Zylinder, in dem ein Innenzylinder angeordnet ist,
b) zwischen Zylinder und Innenzylinder ist ein Ringraum gebildet, in dem der äußere Steuerkolben axial bewegbar ist,
c) im Innenzylinder ist der innere Steuerkolben bewegbar und trennt einen Druckraum von einem Kopfraum des Innenzylinders,
d) der Innenzylinder weist im Bereich des Kopfraums eine axial gerichtete Öffnung zum Durchtritt einer Kolbenverlängerung auf,
e) der Druckraum des Innenzylinders ist mit dem Anschluss für Vorratsdruck verbunden.

Die Kolbenverlängerung weist vorzugsweise einen geringeren Querschnitt auf als der innere Steuerkolben und ist insbesondere ein Fortsatz desselben. Die Kolbenverlängerung kann aber auch Teil des äußeren Steuerkolbens sein und vom äußeren Steuerkolben in den Kopfraum hineinragen.

Nach einem weiteren Gedanken der Erfindung weist das Ventil zusätzlich folgende Merkmale auf:
a) der äußere Steuerkolben überdeckt den Innenzylinder in axialer Richtung zumindest teilweise,
b) der äußere Steuerkolben weist drei außen umlaufende Dichtungen auf zur Bildung von vier Außenzonen, nämlich einer ersten Außenzone in Verbindung mit dem Anschluss für Entlüftung, einer zweiten Außenzone in zeitweiliger Verbindung mit dem Anschluss als Druckausgang, einer dritten Außenzone in Verbindung mit dem Anschluss für Vorratsbehälterdruck, und einer insbesondere drucklosen, vierten Außenzone,
c) der Zylinder weist einen Überströmbereich auf, der in Axialrichtung breiter ist als eine umlaufende Dichtung zwischen erster Außenzone und zweiter Außenzone,
d) in Parkstellung steht die umlaufende Dichtung zwischen erster Außenzone und zweiter Außenzone über dem Überströmbereich, derart, dass eine Verbindung vom Anschluss für Entlüftung zum Anschluss als Druckausgang besteht.

Nach einem weiteren Gedanken der Erfindung weist das Ventil zusätzlich folgende Merkmale auf:
a) der Innenzylinder weist zwei außen umlaufende Dichtungen auf zur Bildung von drei Innenzonen, nämlich einer ersten Innenzone zur zumindest zeitweiligen Verbindung mit der ersten Außenzone, einer zweiten Innenzone mit einer Öffnung in den Druckraum und einer dritten Innenzone benachbart zum Kopfraum,
b) der äußere Steuerkolben weist im Bereich seiner zweiten Außenzone eine Öffnung zur Verbindung mit der zweiten Innenzone in Fahrtstellung auf.

Außenzonen und Innenzonen sind durch den äußeren Steuerkolben voneinander getrennt, zumindest zeitweilig.

Nach einem weiteren Gedanken der Erfindung ist vorgesehen, dass die Öffnung zum Durchtritt der Kolbenverlängerung keine Abdichtung gegen die Kolbenverlängerung aufweist, sodass durch die Öffnung ein Druckaustausch möglich ist. Vorzugsweise weist die Öffnung einen Querschnitt auf, der um mindestens 5 % größer ist als der Querschnitt der Kolbenverlängerung. Dadurch ist ein Druckaustausch durch die Öffnung besonders leicht möglich.

Nach einem weiteren Gedanken der Erfindung ist vorgesehen, dass der äußere Steuerkolben eine Drosselbohrung in Richtung auf den inneren Steuerkolben aufweist. Die Drosselbohrung erleichtert den Druckausgleich von der vierten Außenzone zur dritten Innenzone.

Nach einem weiteren Gedanken der Erfindung ist vorgesehen, dass der Anschluss für Vorratsdruck und der Anschluss für Vorratsbehälterdruck über ein Rückschlagventil miteinander verbunden sind, derart, dass eine Luftströmung zum Anschluss für Vorratsdruck gesperrt ist. Vorzugsweise in das Park-Löse-Ventil integriert ist somit ein Schutz gegen das Abströmen von Druckluft aus dem Vorratsbehälter in einen im Fehlerfall nur verringerten Vorratsdruck führenden Bereich des Ventils.

Nach einem weiteren Gedanken der Erfindung ist vorgesehen, dass der äußere Steuerkolben eine Betätigungsstange aufweist, welche sich, dem inneren Steuerkolben gegenüberliegend, aus einem Ventilgehäuse heraus erstreckt. Das Ventilgehäuse ist vorzugsweise zugleich der oben genannte Zylinder. An einem freien Ende der Betätigungsstange kann ein Betätigungsknauf vorgesehen sein.

Gegenstand der Erfindung ist auch eine Ventilanordnung für ein Anhängefahrzeug, mit einem Park-Löse-Ventil, wie voranstehend dargestellt, und mit einem Notbremsventil, wobei ein Anschluss als Druckausgang des Park-Löse-Ventils mit einem Steuereingang des Notbremsventils verbunden ist. Der Druckausgang des Park-Löse-Ventils speist in diesem Fall nicht unmittelbar die Federspeicherbremszylinder, sondern steuert die Funktion des Notbremsventils. Letzteres lässt bei entsprechender Stellung und anliegendem Druck Druckluft in die Federspeicher-Bremszylinder strömen. Daneben hat das Notbremsventil die Aufgabe, bei übermäßigem Rückgang des Vorratsdrucks (Abrissfunktion) die Federspeicher-Bremszylinder zu entlüften. Vorzugsweise ist das Notbremsventil zusätzlich mit einem Überlastschutz versehen. Dadurch wird sichergestellt, dass die Federspeicher-Bremszylinder belüftet werden, wenn die Betriebsbremse aktiviert wird.

Nach einem weiteren Gedanken der Erfindung kann das Notbremsventil in der Ventilanordnung einen Anschluss als Druckausgang, einen Anschluss für Vorratsbehälterdruck und einen Anschluss für Entlüftung aufweisen, wobei je nach Schaltstellung der Anschluss als Druckausgang mit dem Anschluss für Vorratsbehälterdruck oder mit dem Anschluss für Entlüftung verbindbar ist.

Gegenstand der Erfindung ist auch eine pneumatische Bremsanlage mit einer Ventilanordnung oder einem Park-Löse-Ventil, wie voranstehend beschrieben.

Schließlich ist Gegenstand der Erfindung auch ein Anhängefahrzeug mit einer pneumatischen Bremsanlage, wie zuvor genannt.

Weitere Merkmale der Erfindung ergeben sich aus der Beschreibung im Übrigen und aus den Ansprüchen. Vorteilhafte Ausführungsbeispiele der Erfindung werden nachfolgend anhand von Zeichnungen näher erläutert. Es zeigen:
- Fig. 1: eine pneumatische Bremsanlage eines Anhängefahrzeugs mit Park-Löse-Ventil und Notbremsventil,
- Fig. 2: das Park-Löse-Ventil im Schnitt entlang einer axial gerichteten Ebene, in Lösestellung,
- Fig. 3: das Park-Löse-Ventil in Fahrtstellung,
- Fig. 4: das Park-Löse-Ventil in Parkstellung,
- Fig. 5: Fig. 3 in vergrößerter Darstellung,
- Fig. 6: einen Ausschnitt aus Fig. 1, nämlich das Park-Löse-Ventil.

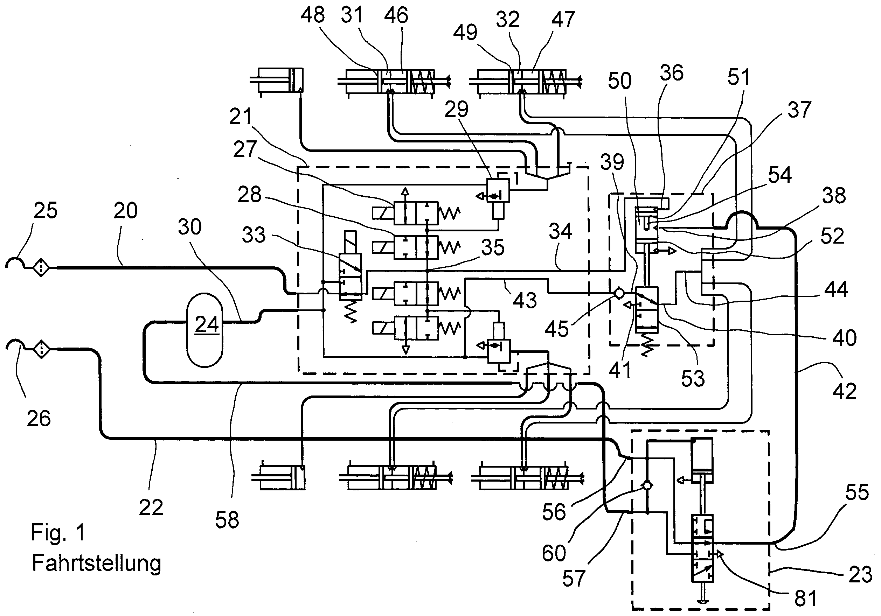

Figur 1 zeigt eine pneumatische Bremsanlage für ein Anhängefahrzeug. Eine Steuerdruckleitung 20 führt zu einem Anhängerbremsmodul 21. Eine Vorratsdruckleitung 22 führt zu einem Park-Löse-Ventil 23 und von diesem weiter über einen Vorratsbehälter 24 zum Anhängerbremsmodul 21. Der Steuerdruckleitung 20 ist ein Steueranschluss 25 zugeordnet, der Vorratsdruckleitung 22 ein Versorgungsanschluss 26.

Das Anhängerbremsmodul 21 ist in bekannter Weise aufgebaut, nämlich je Fahrzeugseite mit zwei Magnetventilen 27, 28 und einem Relaisventil 29. Über die Magnetventile 27, 28 wird die Zufuhr des Steuerdrucks zu den Relaisventilen 29 geregelt. Letztere sind über eine Leitung 30 mit Verzweigungen zugleich an Vorratsbehälterdruck aus dem Vorratsbehälter 24 angeschlossen und geben ausgesteuerten Betriebsbremsdruck an Betriebsbremszylinder 31, 32 ab.

Weiterer Bestandteil des Anhängerbremsmoduls 21 ist ein Redundanzventil 33 als Magnetventil, mit dem die Verbindung zwischen der Steuerdruckleitung 20 und einer Leitung 34 trennbar und umstellbar ist. Auf diese Weise kann die Leitung 34 alternativ mit der Leitung 30 und dem Vorratsbehälterdruck aus dem Vorratsbehälter 24 verbunden werden. Die Leitung 34 verbindet außerdem über einen Abzweig 35 die Magnetventile 28 beider Fahrzeugseiten miteinander.

Weiterhin verbindet die Leitung 34 (bei entsprechend geschaltetem Redundanzventil 33) die Steuerdruckleitung 20 oder die Leitung 30 mit einem ersten Steuereingang 36 einer Ventilanordnung 37. Die Ventilanordnung 37 hat hier insbesondere die Funktion eines Notbremsventils mit Überlastschutz und weist hierzu noch einen zweiten Steuereingang 38, sowie einen ersten Anschluss 39, einen zweiten Anschluss 40 und einen dritten Anschluss 41 auf.

Der zweite Steuereingang 38 ist über eine Leitung 42 und das Park-Löse-Ventil 23 an die Vorratsdruckleitung 22 angeschlossen. Der erste Anschluss 39 ist über eine Leitung 43, ein Rückschlagventil 45 und das Anhängerbremsmodul 21 mit dem Vorratsbehälter 24 verbunden. Der zweite Anschluss 40 ist über eine Leitung 44 und Verzweigungen mit Federspeicher-Bremszylindern 46, 47 beider Fahrzeugseiten verbunden. Der dritte Anschluss 41 ist ein Entlüftungsanschluss.

In der gezeigten Bremsanlage sind die Betriebsbremszylinder 31, 32 Bestandteile sogenannter Kombizylinder, nämlich mit integrierten Federspeicher-Bremszylindern 46, 47, wobei die Kräfte beim Betätigen der Betriebsbremse einerseits und von Federspeichern andererseits auf jeweils dieselben Bremskolben 48, 49 wirken.

In Fahrtstellung gemäß Figur 1 ist die pneumatische Bremsanlage in Bereitschaft. Das heißt, die Federspeicher-Bremszylinder 46, 47 sind durch Vorratsbehälterdruck aus dem Vorratsbehälter 24 belüftet. Hierzu ist der erste Anschluss 39 mit dem zweiten Anschluss 40 über die Ventilanordnung 37 verbunden.

Die Ventilanordnung 37 befindet sich in einer aktiv geschalteten, zweiten Schaltstellung. Ausgelöst ist diese zweite Schaltstellung durch den am zweiten Steuereingang 38 anliegenden Vorratsdruck von mindestens 2,5 bar auf der Vorratsdruckleitung 22. Der Vorratsdruck wird hierzu von der Vorratsdruckleitung 22 durch das Park-Löse-Ventil 23 und durch die Leitung 42 bis zum zweiten Steuereingang 38 geführt. Der dort anliegende Vorratsdruck beaufschlagt einen Zylinderraum 50 zwischen zwei koaxial in Reihe angeordneten Kolben 51, 52, so dass eine Ventileinheit 53 durch Druck des Kolbens 52 die in Figur 1 gezeigte Stellung einnimmt. Dabei liegt am ersten Steuereingang 36 kein Druck an.

Der Kolben 54 ist druckabhängig zwischen den Steuereingängen 36, 38 verschiebbar und in Richtung auf den Kolben 52 mit einem Abstandhalter 54 versehen. Ergänzend sind der Zylinderraum 50 so dimensioniert und die Steuereingänge 36, 38 so positioniert, dass bei Druck an wenigstens einem der Steuereingänge 36, 38 der Kolben 52 beaufschlagt wird (durch Druck oder den Abstandhalter 54) und die Ventileinheit 53 die gezeigte Fahrstellung einnimmt.

Da kein Steuerdruck aus der Steuerdruckleitung 20 anliegt, sind auch die Betriebsbremszylinder 31, 32 unbelüftet.

Das Park-Löse-Ventil 23 weist hier drei Anschlüsse auf, nämlich einen Anschluss 55 für die Leitung 42, einen Anschluss 56 für die Vorratsdruckleitung 22 und einen Anschluss 57 für eine Leitung 58 zum Vorratsbehälter 24 mit Vorratsbehälterdruck. Innerhalb des Park-Löse-Ventils 23 sind die Anschlüsse 56, 57 über einen Abzweig 59 mit Rückschlagventil 60 miteinander verbunden. Letzteres ist so angeordnet, dass der Vorratsbehälterdruck am Anschluss 57 nicht zu einem eventuell niedrigeren Vorratsdruck am Anschluss 56 abströmen kann.

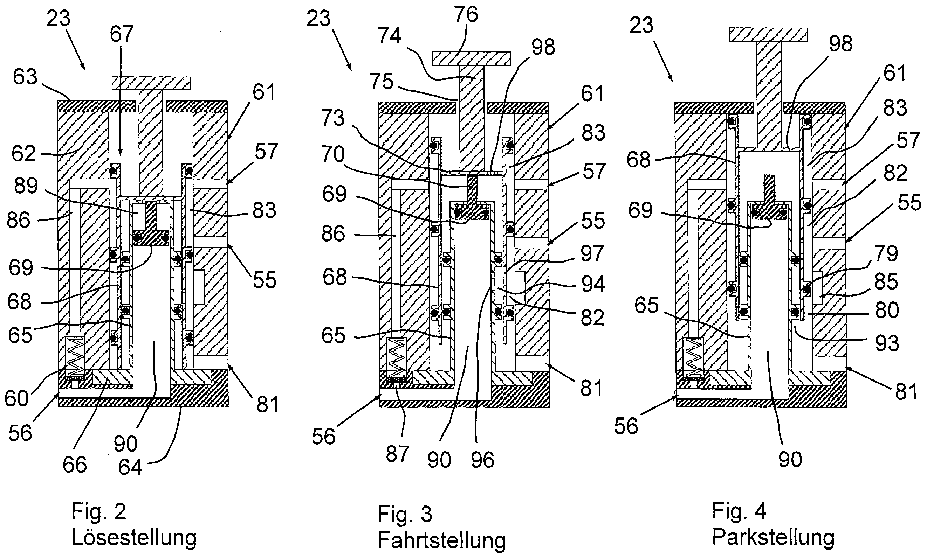

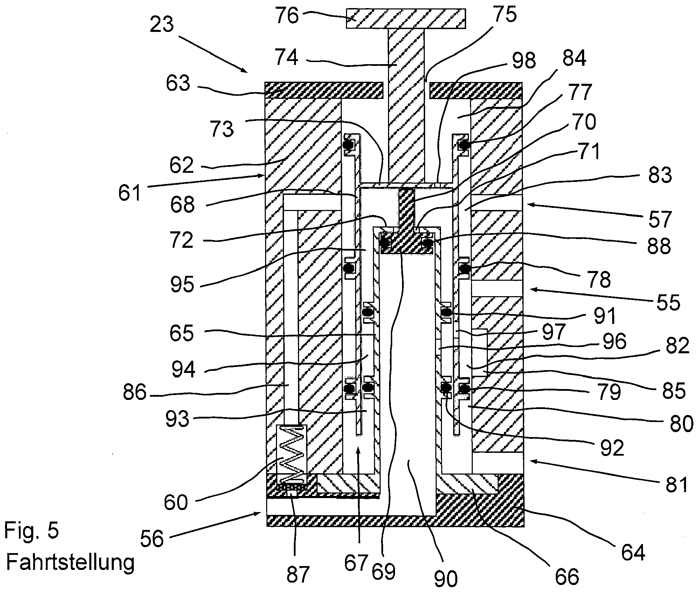

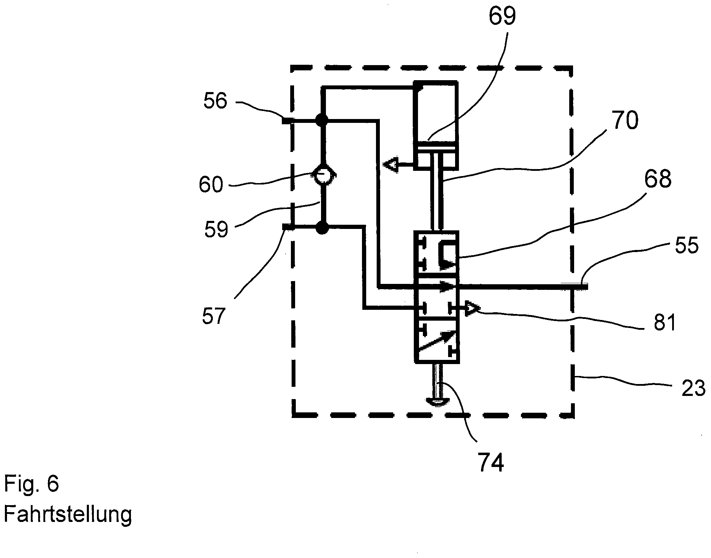

Anhand der Fig. 2 bis 6 werden nachfolgend Aufbau und Funktion des Park-Löse-Ventils 23 erläutert:
Ein Gehäuse wird gebildet durch einen Zylinder 61 mit Zylinderwandung 62, Zylinderkopf 63 und Zylinderboden 64. Im Inneren des Zylinders 61 ist ein Innenzylinder 65 angeordnet. Dessen Boden 66 ist in den Zylinderboden 64 integriert oder mit diesem verbunden. Zwischen Zylinder 61 und Innenzylinder 65 ist ein Ringraum 67 gebildet.

Im Ringraum 67 ist ein hoher äußerer Steuerkolben 68 axial bewegbar. Außerdem ist im Innenzylinder 65 ein innerer Steuerkolben 69 axial bewegbar. Ringraum 67, Innenzylinder 65 und Steuerkolben 68, 69 sind konzentrisch zueinander angeordnet.

Der innere Steuerkolben 69 ist mit einer Kolbenverlängerung 70 versehen, welche durch eine Öffnung 71 in einem Kopf 72 des Innenzylinders 65 bewegbar ist und dabei an einem Kolbenkopf 73 des äußeren Steuerkolbens 68 anliegen kann, siehe insbesondere Fig. 3.

Ausgehend vom Kolbenkopf 73 ist mit dem äußeren Steuerkolben 68 eine Betätigungsstange 74 verbunden, welche durch eine Öffnung 75 im Zylinderkopf 63 hindurchragt und außerhalb des Zylinders 61 einen Betätigungsknauf 76 aufweist.

Äußerer Steuerkolben 68, Innenzylinder 65 und innerer Steuerkolben 69 sind mit umlaufenden Dichtungen versehen:
Der äußere Steuerkolben 68 weist hier drei umlaufende Dichtungen 77, 78, 79 auf, durch die vier Außenzonen zwischen äußerem Steuerkolben 68 und Zylinderwandung 62 gebildet sind, nämlich eine erste Außenzone 80 in Verbindung mit einem Anschluss für Entlüftung 81, eine zweite Außenzone 82 in zeitweiliger Verbindung mit dem Anschluss als Druckausgang 55, eine dritte Außenzone 83 in Verbindung mit dem Anschluss an Vorratsbehälterdruck 57 und eine drucklose vierte Außenzone 84 zwischen Kolbenkopf 73 und Zylinderkopf 63. Die benannten Zonen 80, 82, 83, 84 sind im Wesentlichen ringförmig und schließen vom Boden 66 bis zum Zylinderkopf 63 aneinander an, nur getrennt durch die genannten umlaufenden Dichtungen 77, 78, 79.

Der Zylinder 61 weist innen an seiner Zylinderwandung 62 einen Überströmbereich 85 auf, etwa zwischen dem Anschluss als Druckausgang 55 und dem Anschluss für Entlüftung 81. Der Überströmbereich 85 erstreckt sich in axialer Richtung deutlich weiter als die umlaufende Dichtung 79, so dass in der Parkstellung gemäß der Fig. 4 die umlaufende Dichtung 79 wirkungslos ist.

In der Zylinderwandung 62 erstreckt sich ein Kanal 86 zwischen dem Rückschlagventil 60 und der dritten Außenzone 83. Vom Rückschlagventil 60 mündet ein kleiner Kanal 87 im Anschluss für Vorratsdruck 56. Das Rückschlagventil 60 ist in die Zylinderwandung 62 und den Zylinderboden 64 integriert. Anschluss 56 und Kanal 87 sind in den Zylinderboden 64 integriert.

Der innere Steuerkolben 69 ist mit einer umlaufenden Dichtung 88 versehen und trennt so innerhalb des Innenzylinders 65 einen Kopfraum 89 von einem Druckraum 90. Der Kopfraum 89 ist nur in Fig. 2 sichtbar.

Der Innenzylinder 65 weist außen zwei umlaufende Dichtungen 91, 92 auf, zur Bildung von drei Innenzonen zwischen Innenzylinder 65 und äußerem Steuerkolben 68. Eine erste Innenzone 93 ist zumindest zeitweilig in Verbindung mit der ersten Außenzone 80. Eine zweite Innenzone 94 ist im Wesentlichen benachbart zur zweiten Außenzone 82 vorgesehen und weist eine Öffnung 96 zum Druckraum 90 auf. Die Bohrung 96 ist radial im Innenzylinder 65 vorgesehen.

Zwischen den umlaufenden Dichtungen 78, 79 weist der hohle, äußere Steuerkolben 68 eine Bohrung 97 auf, die in Lösestellung gemäß Fig. 2 und Fahrtstellung gemäß Fig. 3 die zweite Außenzone 82 mit der zweiten Innenzone 94 verbindet.

Die dritte Innenzone 95 erstreckt sich über den Kopf 72 des Innenzylinders 65. Außenzonen 80, 82, 83, 84 und Innenzonen 93, 94, 95 sind im Ringraum 67 gebildet.

Die Öffnung 71 weist vorzugsweise einen um mindestens 5% größeren Querschnitt auf als die Kolbenverlängerung 70 in diesem Bereich, so dass über die Öffnung 71 stets ein Druckausgleich zwischen dem Kopfraum 89 und der dritten Innenzone 95 stattfindet. Der Kolbenkopf 73 ist mit einer Drosselbohrung 78 versehen, mit der eine Dämpfung beim Umschalten des Ventils 23 erreicht wird. Die Öffnung 75 weist einen größeren Querschnitt auf als die Betätigungsstange 74, so dass ein Druckausgleich zwischen der vierten Außenzone 84 mit der Atmosphäre stattfindet.

In Fahrtstellung gemäß Fig. 3 liegt im Druckraum 90 Vorratsdruck an dem Anschluss 56 an. Der innere Steuerkolben 69 liegt am Kopf 72 innen an und die Kolbenverlängerung 70 drückt gegen den Kolbenkopf 73 des äußeren Steuerkolbens 68. Entsprechend befindet sich der Betätigungsknauf 76 in einer Mittelstellung. Vom Druckraum 90 besteht über die Bohrungen 96, 97, die zweite Innenzone 94 und die zweite Außenzone 82 eine Verbindung zum Anschluss als Druckausgang 55. Entsprechend liegt dann auch am Anschluss 55 Vorratsdruck an, ebenso im Kanal 86, da das Rückschlagventil 60 in dieser Richtung durchlässig ist. Der Kanal 86 steht in Verbindung mit der dritten Außenzone 83 und damit auch mit dem Anschluss für Vorratsbehälterdruck 57.

In Lösestellung gemäß Fig. 2 besteht eine Verbindung vom Anschluss für Vorratsbehälterdruck 57 zum Anschluss als Druckausgang 55. Hierzu befindet sich der Betätigungsknauf mit dem äußeren Steuerkolben 68 in seiner untersten Position. Dabei liegt der äußere Steuerkolben 68 am Boden 66 an. Die dritte Außenzone 83 erstreckt sich über beide Anschlüsse 55, 57. Aufgrund des Rückschlagventils 60 gelangt kein Druck von Anschluss 57 durch den Kanal 86 zum Anschluss 56. Der Druckraum 90 ist nahezu drucklos, da das Anhängefahrzeug in Lösestellung abgekoppelt ist, entsprechend drückt der äußere Steuerkolben 68 den inneren Steuerkolben 69 in den Innenzylinder 65 hinein. Die Betätigungsstange 74 ist maximal in den Zylinder 61 hineingedrückt.

In Parkstellung gemäß Fig. 4 ist der Betätigungsknauf 76 maximal aus dem Zylinder 61 herausgezogen, so dass der äußere Steuerkolben 68 in seiner obersten Position steht. Dabei liegt die umlaufende Dichtung 79 über dem Überströmbereich 85, so dass erste Außenzone 80 und zweite Außenzone 82 miteinander in Verbindung stehen, ebenso der Anschluss als Druckausgang 55 mit dem Anschluss für Entlüftung 81. Dadurch wird die Leitung 42 entlüftet und die Ventilanordnung 37 bewirkt eine Entlüftung der Federspeicher-Bremszylinder 46, 47.

## Patentansprüche

1. Park-Löse-Ventil (23) für ein Anhängefahrzeug mit pneumatischer Bremsanlage und zur Steuerung des Drucks in Federspeicher-Bremszylindern (46, 47), und mit folgenden Merkmalen:
a) ein äußerer Steuerkolben (68) und ein darin angeordneter innerer Steuerkolben (69),
b)
- ein Anschluss für Vorratsdruck (56),
- ein Anschluss für Vorratsbehälterdruck (57),
- ein Anschluss für Entlüftung (81),
- ein Anschluss als Druckausgang (55),
c) der äußere Steuerkolben (68) ist zumindest zwischen drei Stellungen bewegbar:
- einer Lösestellung, dabei ist der Anschluss für Vorratsbehälterdruck (57) mit dem Anschluss als Druckausgang (55) verbunden,
- einer Fahrtstellung, dabei ist der Anschluss für Vorratsdruck (56) mit dem Anschluss für Vorratsbehälterdruck (57) und mit dem Anschluss als Druckausgang (55) verbunden,
- einer Parkstellung, dabei ist der Anschluss als Druckausgang (55) mit dem Anschluss für Entlüftung (81) verbunden,
d) in Fahrtstellung ist der innere Steuerkolben (69) mit Vorratsdruck (56) beaufschlagt und drückt gegen den äußeren Steuerkolben (68), derart, dass der äußere Steuerkolben (68) in seiner Bewegung eingeschränkt ist und keine Lösestellung annehmen kann.

2. Park-Löse-Ventil (23) nach Anspruch 1, **gekennzeichnet durch** folgende Merkmale:
a) ein Zylinder (61), in dem ein Innenzylinder (65) angeordnet ist,
b) zwischen Zylinder (61) und Innenzylinder (65) ist ein Ringraum (67) gebildet, in dem der äußere Steuerkolben (68) axial bewegbar ist,
c) im Innenzylinder (65) ist der innere Steuerkolben (69) bewegbar und trennt einen Druckraum (90) von einem Kopfraum (89) des Innenzylinders (65),
d) der Innenzylinder (65) weist im Bereich des Kopfraums (89) eine axial gerichtete Öffnung (71) zum Durchtritt einer Kolbenverlängerung (70) auf,
e) der Druckraum (90) des Innenzylinders (65) ist mit dem Anschluss für Vorratsdruck (56) verbunden.

3. Park-Löse-Ventil (23) nach Anspruch 2, **gekennzeichnet durch** folgende Merkmale:
a) der äußere Steuerkolben (68) überdeckt den Innenzylinder (65) in axialer Richtung zumindest teilweise,
b) der äußere Steuerkolben (68) weist drei außen umlaufende Dichtungen (77, 78, 79) auf, zur Bildung von vier Außenzonen, nämlich einer ersten Außenzone (80) in Verbindung mit dem Anschluss für Entlüftung (81), einer zweiten Außenzone (82) in zeitweiliger Verbindung mit dem Anschluss als Druckausgang (55), einer dritten Außenzone (83) in Verbindung mit dem Anschluss für Vorratsbehälterdruck (57) und einer insbesondere drucklosen vierten Außenzone (84),
c) der Zylinder (61) weist einen Überströmbereich (85) auf, der in Axialrichtung breiter ist als eine umlaufende Dichtung (79) zwischen erster Außenzone (80) und zweiter Außenzone (82),
d) in Parkstellung steht die umlaufende Dichtung (79) zwischen erster Außenzone (80) und zweiter Außenzone (82) über dem Überströmbereich (85), derart, dass eine Verbindung vom Anschluss für Entlüftung (81) zum Anschluss als Druckausgang (55) besteht.

4. Park-Löse-Ventil (23) nach Anspruch 3, **gekennzeichnet durch** folgende Merkmale:
a) der Innenzylinder (65) weist zwei außen umlaufende Dichtungen (91, 92) auf, zur Bildung von drei Innenzonen, nämlich einer ersten Innenzone (93) zur zumindest zeitweiligen Verbindung mit der ersten Außenzone (80), einer zweiten Innenzone (94) mit einer Bohrung (96) in den Druckraum (90), und einer dritten Innenzone (95) benachbart zum Kopfraum (89),
b) der äußere Steuerkolben (68) weist im Bereich seiner zweiten Außenzone (82) eine Bohrung (97) zur Verbindung mit der zweiten Innenzone (94) in Fahrtstellung auf.

5. Park-Löse-Ventil (23) nach Anspruch 2 oder einem der weiteren Ansprüche, **dadurch gekennzeichnet, dass** die Öffnung (71) zum Durchtritt der Kolbenverlängerung (70) keine Abdichtung gegen die Kolbenverlängerung (70) aufweist, so dass durch die Öffnung (71) ein Druckaustausch möglich ist.

6. Park-Löse-Ventil (23) nach Anspruch 1 oder einem der weiteren Ansprüche, **dadurch gekennzeichnet, dass** der äußere Steuerkolben (68) eine Drosselbohrung (98) in Richtung auf den inneren Steuerkolben (69) aufweist.

7. Park-Löse-Ventil (23) nach Anspruch 1 oder einem der weiteren Ansprüche, **dadurch gekennzeichnet, dass** der Anschluss für Vorratsdruck (56) und der Anschluss für Vorratsbehälterdruck (57) über ein Rückschlagventil (60) miteinander verbunden sind, derart, dass eine Luftströmung zum Anschluss für Vorratsdruck (56) gesperrt ist.

8. Park-Löse-Ventil (23) nach Anspruch 1 oder einem der weiteren Ansprüche, **dadurch gekennzeichnet, dass** der äußere Steuerkolben (68) eine Betätigungsstange (74) aufweist, welche sich, dem inneren Steuerkolben (69) gegenüberliegend, aus einem Zylinderkopf (63) heraus erstreckt.

9. Ventilanordnung für ein Anhängefahrzeug, mit einem Park-Löse-Ventil (23) nach einem der voranstehenden Ansprüche und mit einem Notbremsventil, wobei ein Anschluss als Druckausgang (55) des Park-Löse-Ventils (23) mit einem Steuereingang (38) des Notbremsventils verbunden ist.

10. Ventilanordnung nach Anspruch 9, **dadurch gekennzeichnet, dass** das Notbremsventil einen Anschluss (40) als Druckausgang, einen Anschluss (39) für Vorratsbehälterdruck (57) und einen Anschluss (41) für Entlüftung aufweist, und dass je nach Schaltstellung der Anschluss (40) für den Druckausgang mit dem Anschluss (39) für Vorratsbehälterdruck oder mit dem Anschluss (41) für Entlüftung verbindbar ist.

11. Pneumatische Bremsanlage mit einer Ventilanordnung nach Anspruch 9 oder 10 oder mit einem Park-Löse-Ventil nach einem der Ansprüche 1 bis 8.

12. Anhängefahrzeug mit einer pneumatischen Bremsanlage nach Anspruch 11.

## Claims

1. Park release valve (23) for a trailer vehicle with a pneumatic brake system and for controlling the pressure in spring brake cylinders (46, 47), and having the following features:
a) an outer control piston (68) and an inner control piston (69) which is arranged therein,
b)
- a connector for supply pressure (56),
- a connector for reservoir pressure (57),
- a connector for venting (81),
- a connector as pressure outlet (55),
c) the outer control piston (68) can be moved at least between three positions:
- a release position; here, the connector for reservoir pressure (57) is connected to the connector as pressure outlet (55),
- a drive position; here, the connector for supply pressure (56) is connected to the connector for reservoir pressure (57) and to the connector as pressure outlet (55),
- a park position; here, the connector as pressure outlet (55) is connected to the connector for venting (81),
d) in the drive position, the inner control piston (69) is loaded with supply pressure (56) and presses against the outer control piston (68), in such a way that the outer control piston (68) is restricted in terms of its movement and cannot assume a release position.

2. Park release valve (23) according to Claim 1, **characterized by** the following features:
a) a cylinder (61), in which an inner cylinder (65) is arranged,
b) an annular space (67) is formed between the cylinder (61) and the inner cylinder (65), in which annular space (67) the outer control piston (68) can be moved axially,
c) the inner control piston (69) can be moved in the inner cylinder (65) and separates a pressure space (90) from a head space (89) of the inner cylinder (65),
d) the inner cylinder (65) has an axially directed opening (71) in the region of the head space (89) for the passage of a piston extension (70),
e) the pressure space (90) of the inner cylinder (65) is connected to the connector for supply pressure (56) .

3. Park release valve (23) according to Claim 2, **characterized by** the following features:
a) the outer control piston (68) covers the inner cylinder (65) in the axial direction at least partially,
b) the outer control piston (68) has three seals (77, 78, 79) which run around on the outside, for the formation of four outer zones, namely a first outer zone (80) in a connection with the connector for venting (81), a second outer zone (82) in a temporary connection with the connector as pressure outlet (55), a third outer zone (83) in a connection with the connector for reservoir pressure (57), and a fourth outer zone (84) which is, in particular, pressureless,
c) the cylinder (61) has an overflow region (85) which is wider in the axial direction than a circumferential seal (79) between the first outer zone (80) and the second outer zone (82),
d) in the park position, the circumferential seal (79) between the first outer zone (80) and the second outer zone (82) lies above the overflow region (85) in such a way that there is a connection from the connector for venting (81) to the connector as pressure outlet (55).

4. Park release valve (23) according to Claim 3, **characterized by** the following features:
a) the inner cylinder (65) has two seals (91, 92) which run around on the outside, for the formation of three inner zones, namely a first inner zone (93) for the at least temporary connection with the first outer zone (80), a second inner zone (94) with a bore (96) into the pressure space (90), and a third inner zone (95) adjacently with respect to the head space (89),
b) in the region of its second outer zone (82), the outer control piston (68) has a bore (97) for the connection with the second inner zone (94) in the drive position.

5. Park release valve (23) according to Claim 2 or one of the further claims, **characterized in that** the opening (71) for the passage of the piston extension (70) has no sealing means with respect to the piston extension (70), with the result that a pressure exchange is possible through the opening (71).

6. Park release valve (23) according to Claim 1 or one of the further claims, **characterized in that** the outer control piston (68) has a throttle bore (98) in the direction of the inner control piston (69).

7. Park release valve (23) according to Claim 1 or one of the further claims, **characterized in that** the connector for supply pressure (56) and the connector for reservoir pressure (57) are connected to one another via a check valve (60), in such a way that an air flow to the connector for supply pressure (56) is shut off.

8. Park release valve (23) according to Claim 1 or one of the further claims, **characterized in that** the outer control piston (68) has an actuating rod (74) which extends out of a cylinder head (63) in a manner which lies opposite the inner control piston (69).

9. Valve arrangement for a trailer vehicle, having a park release valve (23) according to one of the preceding claims and having an emergency brake valve, a connector as pressure outlet (55) of the park brake valve (23) being connected to a control inlet (38) of the emergency brake valve.

10. Valve arrangement according to Claim 9, **characterized in that** the emergency brake valve has a connector (40) as pressure outlet, a connector (39) for reservoir pressure (57), and a connector (41) for venting, and **in that**, depending on the switching position, the connector (40) for the pressure outlet can be connected to the connector (39) for reservoir pressure or to the connector (41) for venting.

11. Pneumatic brake system having a valve arrangement according to Claim 9 or 10 or having a park release valve according to one of Claims 1 to 8.

12. Trailer vehicle having a pneumatic brake system according to Claim 11.

## Revendications

1. Clapet (23) destiné à relâcher le frein de stationnement d'une remorque, comprenant une installation de frein pneumatique et pour la commande de la pression dans des cylindres de frein à accumulateur à ressort (46, 47), et comprenant les caractéristiques suivantes :
a) un piston de commande extérieur (68) et un piston de commande intérieur (69) disposé dans celui-ci,
b)
- un raccord pour la pression de réserve (56),
- un raccord pour la pression du récipient de réserve (57),
- un raccord de désaérage (81),
- un raccord en tant que sortie de pression (55),
c) le piston de commande extérieur (68) peut être déplacé entre au moins trois positions :
- une position de relâchement, dans laquelle le raccord pour la pression du récipient de réserve (57) est connecté au raccord en tant que sortie de pression (55),
- une position de conduite dans laquelle le raccord pour la pression de réserve (56) est connecté au raccord pour la pression du récipient de réserve (57) et au raccord en tant que sortie de pression (55),
- une position de stationnement dans laquelle le raccord en tant que sortie de pression (55) est connecté au raccord de désaérage (81),
d) dans la position de conduite, le piston de commande intérieur (69) est sollicité avec la pression de réserve (56) et presse contre le piston de commande extérieur (68), de telle sorte que le déplacement du piston de commande extérieur (68) soit limité et qu'il ne puisse pas adopter de position de relâchement.

2. Clapet (23) destiné à relâcher le frein de stationnement selon la revendication 1, **caractérisé par** les caractéristiques suivantes :
a) un cylindre (61) dans lequel est disposé un cylindre intérieur (65),
b) entre le cylindre (61) et le cylindre intérieur (65) est formé un espace annulaire (67) dans lequel le piston de commande extérieur (68) peut être déplacé axialement,
c) le piston de commande intérieur (69) peut être déplacé dans le cylindre intérieur (65) et sépare un espace de pression (90) d'un espace de tête (89) du cylindre intérieur (65),
d) le cylindre intérieur (65) présente, dans la région de l'espace de tête (89), une ouverture orientée axialement (71) pour le passage d'un prolongement de piston (70),
e) l'espace de pression (90) du cylindre intérieur (65) est connecté au raccord pour la pression de réserve (56).

3. Clapet (23) destiné à relâcher le frein de stationnement selon la revendication 2, **caractérisé par** les caractéristiques suivantes :
a) le piston de commande extérieur (68) recouvre le cylindre intérieur (65) au moins en partie dans la direction axiale,
b) le piston de commande extérieur (68) présente trois joints d'étanchéité périphériques extérieurs (77, 78, 79) pour la formation de quatre zones extérieures, à savoir une première zone extérieure (80) en liaison avec le raccord de désaérage (81), une deuxième zone extérieure (82) en liaison temporaire avec le raccord en tant que sortie de pression (55), une troisième zone extérieure (83) en liaison avec le raccord pour la pression du récipient de réserve (57) et une quatrième zone extérieure (84) notamment sans pression,
c) le cylindre (61) présente une région de débordement (85) qui est plus large dans la direction axiale qu'un joint d'étanchéité périphérique (79) entre la première zone extérieure (80) et la deuxième zone extérieure (82),
d) dans la position de stationnement, le joint d'étanchéité périphérique (79) est situé entre la première zone extérieure (80) et la deuxième zone extérieure (82) au-dessus de la région de débordement (85) de telle sorte qu'il se produise une liaison du raccord de désaérage (81) au raccord en tant que sortie de pression (55) .

4. Clapet (23) destiné à relâcher le frein de stationnement selon la revendication 3, **caractérisé par** les caractéristiques suivantes :
a) le cylindre intérieur (65) présente deux joints d'étanchéité périphériques extérieurs (91, 92) pour former trois zones intérieures, à savoir une première zone intérieure (93) pour la liaison au moins temporaire à la première zone extérieure (80), une deuxième zone intérieure (94) avec un alésage (96) dans l'espace de pression (90) et une troisième zone intérieure (95) adjacente à l'espace de tête (89),
b) le piston de commande extérieure (68) présente, dans la région de sa deuxième zone extérieure (82), un alésage (97) pour la liaison à la deuxième zone intérieure (94) dans la position de conduite.

5. Clapet (23) destiné à relâcher le frein de stationnement selon la revendication 2 ou selon l'une quelconque des autres revendications, **caractérisé en ce que** l'ouverture (71) pour le passage du prolongement de piston (70) ne présente pas d'étanchéité vis-à-vis du prolongement de piston (70) de sorte qu'un échange de pression est possible à travers l'ouverture (71).

6. Clapet (23) destiné à relâcher le frein de stationnement selon la revendication 1 ou selon l'une quelconque des autres revendications, **caractérisé en ce que** le piston de commande extérieur (68) présente un alésage d'étranglement (98) dans la direction du piston de commande intérieur (69).

7. Clapet (23) destiné à relâcher le frein de stationnement selon la revendication 1 ou selon l'une quelconque des autres revendications, **caractérisé en ce que** le raccord pour la pression de réserve (56) et le raccord pour la pression du récipient de réserve (57) sont connectés l'un à l'autre par le biais d'un clapet antiretour (60) de telle sorte qu'un écoulement d'air vers le raccord pour la pression de réserve (56) soit bloqué.

8. Clapet (23) destiné à relâcher le frein de stationnement selon la revendication 1 ou selon l'une quelconque des autres revendications, **caractérisé en ce que** le piston de commande extérieur (68) présente une tige d'actionnement (74) qui s'étend à l'opposé du piston de commande intérieur (69) hors d'une culasse (63).

9. Agencement de clapet pour une remorque, comprenant un clapet (23) destiné à relâcher le frein de stationnement selon l'une quelconque des revendications précédentes et un clapet de freinage d'urgence, un raccord en tant que sortie de pression (55) du clapet (23) destiné à relâcher le frein de stationnement étant connecté à une entrée de commande (38) du clapet de freinage d'urgence.

10. Agencement de clapet selon la revendication 9, **caractérisé en ce que** le clapet de freinage d'urgence présente un raccord (40) en tant que sortie de pression, un raccord (39) pour la pression du récipient de réserve (57) et un raccord de désaérage (41), et **en ce qu'**en fonction de la position de commutation, le raccord (40) pour la sortie de pression peut être connecté au raccord (39) pour la pression du récipient de réserve ou au raccord de désaérage (41).

11. Installation de frein pneumatique comprenant un agencement de clapet selon la revendication 9 ou 10 ou un clapet destiné à relâcher le frein de stationnement selon l'une quelconque des revendications 1 à 8.

12. Remorque comprenant une installation de frein pneumatique selon la revendication 11.
